# EUROPÄISCHE PATENTANMELDUNG

(11) **EP 1 873 470 A2**
(43) Veröffentlichungstag der Anmeldung: **02.01.2008**
(21) Anmeldenummer: 07009280.4
(22) Anmeldetag: 09.05.2007
(51) Int. Cl.: F28D 21/00, F28F 13/18, B01D 53/26, B01D 53/28, B01J 20/16, F24F 3/14, B01J 20/28

(54) **Feuchtigkeits- und/oder Wärmeaustauschvorrichtung, z.B. Plattenwärmetauscher, Sorptionsrotor, Adsorptionsentfeuchtungsrotor od. dgl.**

(30) Priorität: 30.06.2006 DE 102006030199
(71) Anmelder: Klingenburg GmbH, 45968 Gladbeck (DE); Nanoscape AG, 81377 München (DE)
(72) Erfinder: Sauer, Jürgen, Dr., 81477 München (DE); Westerdorf, Thomas, 44795 Bochum (DE); Klingenburg, Hans, 45239 Essen (DE)
(74) Vertreter: Lelgemann, Karl-Heinz

(57) **Zusammenfassung**

Eine Feuchtigkeits- und/oder Wärmeaustauschvorrichtung, z.B. Plattenwärmetauscher, Sorptionsrotor, Adsorptionsentfeuchtungsrotor od.dgl., hat Feuchtigkeits- bzw. Wärmeaustauschflächen, mittels denen Feuchtigkeit und/oder Wärme in einen Fluidstrom einbringbar und/oder einem Fluidstrom entziehbar und/oder zwischen Fluidströmen austauschbar ist, und einer Beschichtung, mit der die Feuchtigkeits- bzw. Wärmeaustauschflächen beschichtet sind.

Zur Verbesserung des Wirkungsgrads einer derartigen Feuchtigkeits- und/oder Wärmeaustauschvorrichtung wird vorgeschlagen, dass die Beschichtung aus vorzugsweise porösen Alumophosphaten und/oder vorzugsweise porösen Silicoalumophosphaten ausgebildet ist.

## Beschreibung

Die Erfindung bezieht sich auf eine Feuchtigkeits- und/oder Wärmeaustauschvorrichtung, z.B. einen Plattenwärmetauscher, einen Sorptionsrotor, einen Adsorptionsentfeuchtungsrotor od.dgl., mit Feuchtigkeits- bzw. Wärmeaustauschflächen, mittels denen Feuchtigkeit und/oder Wärme in einen Fluidstrom einbringbar und/oder einem Fluidstrom entziehbar und/oder zwischen Fluidströmen austauschbar ist; und einer Beschichtung, mit der die Feuchtigkeits- bzw. Wärmeaustauschflächen beschichtet sind.

Derartige Feuchtigkeits- und/oder Wärmeaustauschvorrichtungen werden häufig zur Temperierung und Klimatisierung von Räumen eingesetzt. Darüber hinaus sind auch ändere industrielle Einsatzzwecke für derartige Feuchtigkeits- und/oder Wärmeaustauschvorrichtungen vorgesehen.

Aus dem Stand der Technik bekannte derartige Feuchtigkeits-und/oder Wärmeaustauschvorrichtungen weisen - insbesondere dann, wenn einem Fluidstrom Feuchtigkeit zu entziehen bzw. ein Fluidstrom mit Feuchtigkeit zu beaufschlagen ist, - den Nachteil auf, dass der Adsorptionsvorgang und/oder der Desorptionsvorgang, der bzw. die in der Feuchtigkeits- und/oder Wärmeaustauschvorrichtung stattfindet bzw. stattfinden, einen zu großen Zeitraum beansprucht, wodurch an sich mögliche Kapazitäten derartiger Feuchtigkeits- und/oder Wärmeaustauschvorrichtungen nicht realisiert werden können. Des weiteren weisen die den Fluidströmen ausgesetzten Oberflächen der Beschichtungen häufig eine Rauhigkeit auf, die zur Folge hat, dass in den Fluidströmen enthaltene Partikel angelagert werden, was zu einer beträchtlichen Einbuße der Wirkungsgrade entsprechender Vorrichtungen führt bzw. häufig vergleichsweise aufwendige Reinigungs- und Wartungsmaßnahmen erfordert. Außerdem besteht häufig die Schwierigkeit, die Beschichtung an dem das'Gerüst bzw. die Matrix der Feuchtigkeits- und/oder Wärmeaustauschvorrichtung ausbildenden Werkstoff zu fixieren.

Ausgehend von dem eingangs geschilderten Stand der Technik liegt der Erfindung die Aufgabe zugrunde, eine Feuchtigkeits-und/oder Wärmeaustauschvorrichtung, z.B. einen Plattenwärmetauscher, einen Sorptionsrotor, einen Adsorptionsentfeuchtungsrotor od.dgl. zu schaffen, bei dem die vorstehend erwähnten Nachteile vermieden und der darüber hinaus mit einem vergleichsweise geringen technisch-konstruktiven Aufwand hergestellt werden kann.

Diese Aufgabe wird erfindungsgemäß dadurch gelöst, dass als Material für die Ausgestaltung der Beschichtung der Feuchtigkeits- bzw. Wärmeaustauschflächen - vorzugsweise poröse - Alumophosphate (AlPO) und/oder - vorzugsweise poröse - Silicoalumophosphate eingesetzt werden. Durch diese Ausgestaltung des die Beschichtung ausbildenden Werkstoffs lässt sich eine im Vergleich zu aus dem Stand der Technik bekannten Materialien erheblich erhöhte Adsorptionskinetik realisieren, die zur Folge hat, dass die Menge des je Zeiteinheit ad- bzw. desorbierten Wasserdampfes erhöht ist, woraus eine erhöhte Feuchteübertragung resultiert. Durch den Einsatz der Alumophosphate bzw. Silicoalumophosphate als Beschichtungsmaterial wird eine Vergrößerung der spezifischen Oberfläche desselben erreicht.

Darüber hinaus sind diese Alumophosphate bzw. Silicoalumophosphate bei Einsatz entsprechend geeigneter Bindemittel auf vielfältigen Oberflächen gut haftbar. Die erfindungsgemäße Beschichtung verfügt über eine schnelle Regenerationsfähigkeit.

Sie ist mit einer sehr gleichmäßigen Partikelgrößenverteilung der Alumophosphate bzw. Silicoalumophosphate herstellbar. Je nach Auswahl der für das Beschichtungsmaterial vorgesehenen Partikelgrößenverteilung kann die Dicke der Beschichtung an unterschiedlichste Anforderungsprofile angepasst werden.

Bei einer niedrigen Partikelgröße < 1000 nm der eingesetzten Alumophosphate bzw. Silicoalumophosphate wird erreicht, dass die Beschichtung an ihrer dem bzw. den Fluidströmen ausgesetzten Oberfläche eine sehr geringe Rauhigkeit aufweist, wodurch die entsprechend ausgestaltete Feuchtigkeits- und/oder Wärmeaustauschvorrichtung sehr verschmutzungsresistent ist. Die erfindungsgemäß ausgestalteten Beschichtungen können - je nach der ausgewählten mehr oder weniger gleichmäßigen Partikelgröße - über eine hohe Packungsdichte verfügen. Zur Aufbringung der Alumophosphate bzw. Silicoalumophosphate als Beschichtung auf die Feuchtigkeits- bzw. Wärmeaustauschflächen können sowohl Spin-Coating- als auch Dip-Coating-Verfahren eingesetzt werden. Die erfindungsgemäß ausgestaltete Beschichtung ist aufgrund der Eigenschaften ihrer Bestandteile hinsichtlich ihrer Oberflächenchemie variabel gestaltbar.

Sofern die Platten von Plattenwärmetauschern mit der erfindungsgemäßen Beschichtung versehen werden, ist erreichbar, dass eine Flüssigkeit, die auf der einen Seite der Wärmetauscherplatte verdunsten soll, um auf der anderen Seite derselben Wärmetauscherplatte Kühlenergie zur Verfügung zu stellen, sehr gleichmäßig auf der die Beschichtung aufweisenden Seite der Wärmetauscherplatte verteilt wird, so dass auf der anderen Seite derselben Wärmetauscherplatte über deren Fläche eine gleichmäßige Verteilung der Kühlenergie vorliegt. Diese gleichmäßige Verteilung geht darauf zurück, dass durch die erfindungsgemäße Beschichtung auftreffende Flüssigkeitstropfen sehr gleichmäßig über die die erfindungsgemäße Beschichtung aufweisende Seite der Wärmetauscherplatte verteilt werden.

Gemäß einer vorteilhaften Ausführungsform der erfindungsgemäßen Feuchtigkeits- und/oder Wärmeaustauschvorrichtung sind die Alumophosphate bzw. Silicoalumophosphate so gewählt, dass sie eine homogene Porengrößenverteilung mit einem Porendurchmesser < 1,5 nm, vorzugsweise 0,4 nm, besitzt. Hierdurch kann sichergestellt werden, dass in der Beschichtung solche Moleküle, die u.U. im langfristigen Betrieb der Feuchtigkeits-und/oder Wärmeaustauschvorrichtung zu Geruchsbelästigungen führen können, nicht aufgenommen werden können. Dahingegen kann Wasserdampf in der entsprechend gestalteten Beschichtung in hervorragender Weise aufgenommen bzw. von dieser Beschichtung abgegeben werden. In dieser Ausgestaltung ist die erfindungsgemäß ausgebildete Beschichtung somit als im Zusammenhang mit dem Betrieb von Feuchtigkeits- und/oder Wärmeaustauschvorrichtungen besonders geeignetes Molekularsieb einsetzbar.

Für den Betrieb entsprechend ausgebildeter Feuchtigkeits-und/oder Wärmeaustauschvorrichtungen ist es zweckmäßig, wenn die Dicke der erfindungsgemäß ausgestalteten Beschichtung 0,2 bis 100, vorzugsweise 1 bis 2 µ (10⁻⁶m) aufweist.

Eine besonders vorteilhafte Weiterbildung der erfindungsgemäßen Feuchtigkeits- und/oder Wärmeaustauschvorrichtung wird erreicht, wenn ein Adsorptionsentfeuchtungsrotor aus einem dafür geeigneten Papierwerkstoff hergestellt und die die Feuchtigkeits- bzw. Wärmeaustauschflächen bildende Werkstoffmatrix dieses Adsorptionsentfeuchtungsrotors mit einer die Alumophosphate und/oder Silicoalumophosphate enthaltenden Suspension getränkt wird.

Diese Tränkung kann solange bzw. in dem Ausmaß durchgeführt werden, bis - nach der Trocknung - die Werkstoffmatrix des Adsorptionsentfeuchtungsrotors zu zumindest 30, vorzugsweise 40 bis 80 Gew.-% aus Alumophosphaten und/oder Silicoalumophosphaten besteht.

Selbstverständlich ist es auch möglich, die erfindungsgemäße Beschichtung einzusetzen, wenn die Werkstoffmatrix der Feuchtigkeits- und/oder Wärmeaustauschvorrichtung aus anderen geeigneten Werkstoffen, z.B. Aluminiumfolien, keramischen Werkstoffen od.dgl., ausgebildet ist.

Als Bindemittel kann ein Dispersionsklebstoff, z.B. Acrylat-Sole, mit einem Zusatz aus eventuell kolloidalem Siliciumoxid, eingesetzt werden. Das entsprechende Bindemittel ist auch bei anderen die Beschichtung ausbildenden Materialien vorteilhaft einsetzbar.

Als Alumophosphate haben sich AlPO4-5 und/oder AlP04-28 und/oder A1PO4-18 als besonders geeignet erwiesen, wobei insbesondere das letztgenannte AlP04-18 zu sehr günstigen Eigenschaften der Beschichtung führt.

Das Alumophosphat kann mit weiteren Elementen dotiert werden, z.B. mit Fe, Kobalt und/oder Nickel.

Darüber hinaus kann das Alumophosphat mit Elementen der dritten Hauptgruppe dotiert werden, wobei sich hierbei insbesondere Gallium als besonders vorteilhaft erwiesen hat.

Als Silicoalumophosphat haben sich SAPO-5, SAPO-17 und/oder SAPO-44 als besonders günstig erwiesen.

Das Silicoalumophosphat kann mit weiteren Elementen dotiert werden, wobei hierbei Fe, Kobalt und/oder Nickel besonders günstige Eigenschaften als Dotierungsmaterial aufweisen.

Des Weiteren bzw. alternativ ist es möglich, das Silicoalumophosphat mit Elementen der dritten und/oder der vierten Hauptgruppe zu dotieren, wobei hierbei insbesondere Gallium und/oder Germanium besonders günstige Eigenschaften als Dotierungsmaterial aufweisen.

Zweckmäßigerweise werden während der Synthese der Alumophosphate bzw. der Silicoalumophosphate gegebenenfalls eingesetzte organische Template vor dem Einsatz der Alumophosphate bzw. Silicoalumophosphate als Adsorptionsmittel entfernt.

Die Entfernung der organischen Template kann z.B. mittels Calcinierung oder Extraktion realisiert werden.

Im Folgenden wird die Erfindung anhand von Ausführungsformen näher beschrieben.

Bei einem Ausführungsbeispiel wird eine als Adsorptionsentfeuchtungsrotor ausgebildete Feuchtigkeits- und/oder Wärmeaustauschvorrichtung mit der erfindungsgemäßen Beschichtung aus porösen Alumophosphaten und/oder Silicoalumophosphaten mit einer Partikelgröße im Bereich von 300 nm versehen. Eine Werkstoffmatrix des Adsorptionsentfeuchtungsrotors besteht aus einem geeigneten Papierwerkstoff. Zum Einbringen der Alumophosphate und/oder Silicoalumophosphate in die Werkstoff-matrix des Adsorptionsentfeuchtungsrotors wird der Adsorptionsentfeuchtungsrotor mit einer Suspension getränkt, die die Alumophosphate bzw. Silicoalumophosphate in der gewünschten Partikelgröße enthält. Nach der Trocknung des Adsorptionsentfeuchtungsrotors besteht dessen Endgewicht zu etwa 50 Gew.-% aus den Alumophosphaten und/oder den Silicoalumophosphaten.

Gegenüber herkömmlichen Werkstoffen haben die zur Tränkung der Werkstoffmatrix des Adsorptionsentfeuchtungsrotors verwendeten Alumophosphate bzw. Silicoalumophosphate mit Partikeln in nanokristalliner Form eine erheblich schnellere Adsorptions-/Desorptionskinetik. Die spezifische Oberfläche der erfindungsgemäßen Beschichtung ist größer als bei anderen herkömmlichen Werkstoffen. Die der Beschichtung des Adsorptionsentfeuchtungsrotors ausbildenden kristallinen Alumophosphate bzw. Silicoalumophosphate sind hinsichtlich ihrer Porengröße vergleichsweise gleichmäßig und so gestaltbar, dass die Beschichtung eine gleichmäßige Porengröße mit einem Durchmesser von beispielsweise 0,4 nm aufweist. Durch diese Gestaltung der Struktur der Beschichtung kann sichergestellt werden, dass der Adsorptionsentfeuchtungsrotor auf Dauer dagegen geschützt ist, geruchsbildende Moleküle zu speichern, wohingegen Wasserdampfmoleküle in einfacher Weise aufgenommen und abgegeben werden können.

Aufgrund der schnellen Adsorptions-/Desorptionskinetik kann die für den Betrieb eines derartigen Adsorptionsentfeuchtungsrotors zu installierende Kälteleistung - insbesondere in tropischen Klimata - erheblich reduziert werden, und zwar bis zu ca. 50 %.

Der vorstehend geschilderte Adsorptionsentfeuchtungsrotor hat nach seiner Beschichtung eine gleichmäßig glatte Oberfläche; damit ist er für etwaige Verschmutzung wenig anfällig.

Die Beschichtung kann hinsichtlich ihrer Oberflächenchemie variabel gestaltet werden. Sie kann mittels Spin-Coating- und Dip-Coating-Techniken aufgebracht werden.

Die Beschichtung hat aufgrund der geringen und gleichmäßigen Partikelgröße eine sehr große spezifische Oberfläche und sie kann auf vielfältigen Oberflächen aufgebracht werden.

Als Bindemittel wurde ein kolloidales Acrylat-Polymer und kolloidales, amorphes, mit Natriumionen oberflächenstabilisiertes Siliciumoxid eingesetzt.

Auch Sorptionsrotoren, deren Werkstoffmatrix aus anderen Werkstoffen, z.B. aus Aluminium, besteht, können mit der vorstehend geschilderten Beschichtung versehen werden, wobei sich ähnliche Vorteile ergeben, wie vorstehend im Zusammenhang mit einem Adsorptionsentfeuchtungsrotor mit einer Werkstoffmatrix aus einem Papierwerkstoff geschildert.

Aufgrund der kleinen Partikelgröße ergibt sich für die Beschichtung eine relativ hohe Packungsdichte und damit können die Schichtdicken vergleichsweise gering sein. Bei dem vorstehend geschilderten Ausführungsbeispiel ist eine Schichtdicke von ca. 1 bis 2 µ (10⁻⁶m) ausreichend.

Des Weiteren ist es möglich, die Beschichtung bei z.B. Plattenwärmetauschern einzusetzen. Wenn die aus den vorstehend geschilderten Werkstoffen bestehende Beschichtung auf eine Seite einer Wärmetauscherplatte aufgebracht wird, kann durch diese Beschichtung erreicht werden, dass zur Befeuchtung dieser Seite der Wärmetauscherplatte eingesetztes Befeuchtungsmittel gleichmäßiger an dieser Seite der Wärmetauscherplatte verteilt wird, was darauf beruht, dass auf die Beschichtung auftreffende Tropfen aufgrund der Struktur der Beschichtung gleichmäßiger aufgeteilt werden. Hierdurch wird auf der diese Beschichtung aufweisenden Seite der Wärmetauscherplatte gleichmäßig Verdunstungswärme abgefordert, was darin resultiert, dass ein Fluidstrom, der an der anderen Seite der Wärmetauscherplatte vorbeiströmt, in gewünschter Weise gekühlt wird. Auch bei dieser Anwendungsform der Beschichtung lassen sich gleiche bzw. ähnliche Vorteile wie die im Zusammenhang mit dem Adsorptionsentfeuchtungs- und dem Sorptionsrotor geschilderten erreichen.

Als Alumophosphat kommt bei dem vorstehend geschilderten Ausführungsbeispiel A1P04-18 zum Einsatz, wohingegen als Silicoalumophosphat SAPO-5, SAPO-17 und/oder SAPO-44 verwendet werden können.

Sowohl das Alumophosphat als auch das Silicoalumophosphat kann mit weiteren Elementen dotiert werden, wobei hier Fe, Kolbalt und/Nickel oder im Falle des Alumophosphats Elemente der dritten Hauptgruppe und im Falle des Silicoalumophosphats Elemente der dritten und/oder vierten Hauptgruppe vorgesehen sein können.

Entsprechend kann im Falle des Alumophosphats insbesondere Gallium und im Falle des Silicoalumophosphats insbesondere Gallium und/oder Germanium als Dotierungsmaterial eingesetzt werden.

Sofern bei der Synthese der Alumophosphate bzw. Silicoalumophosphate organische Template eingesetzt werden, werden diese vor dem Einsatz der Alumophosphate bzw. der Silicoalumophosphate als Adsorptionsmittel entfernt, vorzugsweise indem die organischen Template calciniert bzw. extrahiert werden.

## Patentansprüche

1. Feuchtigkeits- und/oder Wärmeaustauschvorrichtung, z.B. Plattenwärmetauscher, Sorptionsrotor, Adsorptionsentfeuchtungsrotor od.dgl., mit Feuchtigkeits- bzw. Wärmeaustauschflächen, mittels denen Feuchtigkeit und/oder Wärme in einen Fluidstrom einbringbar und/oder einem Fluidstrom entziehbar und/oder zwischen Fluidströmen austauschbar ist, und einer Beschichtung, mit der die Feuchtigkeits- bzw. Wärmeaustauschflächen beschichtet sind, **dadurch gekennzeichnet, dass** die Beschichtung aus vorzugsweise porösen Alumophosphaten (AlPO) und/oder aus vorzugsweise porösen Silicoalumophosphaten (SA-PO) ausgebildet ist.

2. Feuchtigkeits- und/oder Wärmeaustauschvorrichtung nach Anspruch 1, deren Beschichtung Bindemittel enthält.

3. Feuchtigkeits- und/oder Wärmeaustauschvorrichtung nach Anspruch 1 oder 2, bei der die Alumophosphate bzw. die Silicoalumophosphate eine Partikelgröße < 1000 nm aufweisen.

4. Feuchtigkeits- und/oder Wärmeaustauschvorrichtung nach Anspruch 3, bei der die Alumophosphate bzw. Silicoalumophosphate so gewählt sind, dass sie eine homogene Porengrößenverteilung mit einem Porendurchmesser < 1,5 nm, vorzugsweise 0,4 nm, besitzen.

5. Feuchtigkeits- und/oder Wärmeaustauschvorrichtung nach einem der Ansprüche 1 bis 4, bei der die Partikel der Alumophosphate bzw. Silicoalumophosphate in nanokristalliner Form vorliegen.

6. Feuchtigkeits- und/oder Wärmeaustauschvorrichtung nach einem der Ansprüche 1 bis 5, bei der die Dicke der Beschichtung 0,2 bis 100, vorzugsweise 1 bis 2 µ (10⁻⁶m) aufweist.

7. Feuchtigkeits- und/oder Wärmeaustauschvorrichtung nach einem der Ansprüche 1 bis 6, deren Feuchtigkeits- bzw. Wärmeaustauschflächen aus Papierwerkstoffen hergestellt und die mit einer die Alumophosphate bzw. Silicoalumophosphate enthaltenden Suspension getränkt sind.

8. Feuchtigkeits- und/oder Wärmeaustauschvorrichtung nach Anspruch 7, die nach ihrer Tränkung mit bzw. in der die Alumophosphate bzw. die Silicoalumophosphate enthaltenden Suspension zu zumindest 30, vorzugsweise 40 bis 80 Gew.-% aus Alumophosphaten bzw. Silicoalumophosphaten besteht.

9. Feuchtigkeits- und/oder Wärmeaustauschvorrichtung, vorzugsweise nach einem der Ansprüche 2 bis 8, bei der das Bindemittel Dispersionsklebstoffe, wie z.B. Acrylat-Sole, denen zusätzlich kolloidales, SiO₂ zusetzbar ist, enthält.

10. Feuchtigkeits- und/oder Wärmeaustauschvorrichtung nach einem der Ansprüche 1 bis 9, bei der als Alumophosphat A1P04-5 und/oder A1P04-28 und/oder insbesondere A1P04-18 verwendet wird.

11. Feuchtigkeits- und/oder Wärmeaustauschvorrichtung nach einem der Ansprüche 1 bis 10, bei der als Alumophosphat mit zumindest einem weiteren Element dotiert ist.

12. Feuchtigkeits- und/oder Wärmeaustauschvorrichtung nach Anspruch 11, bei der als Alumophosphat mit Fe, Kobalt und/oder Nickel dotiert ist.

13. Feuchtigkeits- und/oder Wärmeaustauschvorrichtung nach Anspruch 11, bei der als Alumophosphat mit zumindest einem Element der dritten Hauptgruppe dotiert ist.

14. Feuchtigkeits- und/oder Wärmeaustauschvorrichtung nach Anspruch 13, bei der als Alumophosphat mit Gallium dotiert ist.

15. Feuchtigkeits- und/oder Wärmeaustauschvorrichtung nach einem der Ansprüche 1 bis 14, bei der als Silicoalumophosphat SAPO-5, SAPO-17 und/oder SAPO-44 verwendet wird.

16. Feuchtigkeits- und/oder Wärmeaustauschvorrichtung nach einem der Ansprüche 1 bis 15, bei der das Silicoalumophosphat mit zumindest einem weiteren Element dotiert ist.

17. Feuchtigkeits- und/oder Wärmeaustauschvorrichtung nach Anspruch 16, bei der das Silicoalumophosphat mit Fe, Kobalt und/oder Nickel dotiert ist.

18. Feuchtigkeits- und/oder Wärmeaustauschvorrichtung nach Anspruch 16, bei der das Silicoalumophosphat mit zumindest einem Element der dritten und/oder der vierten Hauptgruppe dotiert ist.

19. Feuchtigkeits- und/oder Wärmeaustauschvorrichtung nach Anspruch 18, bei der das Silicoalumophosphat mit Gallium und/oder Germanium dotiert ist.

20. Feuchtigkeits- und/oder Wärmeaustauschvorrichtung nach einem der Ansprüche 1 bis 19, bei der während der Synthese der Alumophosphate bzw. Silicoalumophosphate gegebenenfalls eingesetzte organische Template vor dem Einsatz der Alumophosphate bzw. Silicoalumophosphate als Adsorptionsmittel entfernt worden sind.

21. Feuchtigkeits- und/oder Wärmeaustauschvorrichtung nach Anspruch 20, bei der die organischen Template mittels Calcinierung oder Extraktion entfernt sind.
